# EUROPEAN PATENT SPECIFICATION

(11) **EP 3 471 180 B1**
(45) Date of publication and mention of the grant of the patent: **30.09.2020**
(21) Application number: 17801320.7
(22) Date of filing: 31.05.2017
(51) Int. Cl.: H01M 4/525, C01G 53/00, H01M 4/505

(54) **METHOD FOR MANUFACTURING POSITIVE-ELECTRODE ACTIVE MATERIAL FOR LITHIUM SECONDARY BATTERY**
VERFAHREN ZUR HERSTELLUNG EINES POSITIVELEKTRODENAKTIVMATERIALS FÜR EINE LITHIUM-IONEN-SEKUNDÄRBATTERIE
PROCÉDÉ DE FABRICATION DE MATÉRIAU ACTIF D'ÉLECTRODE POSITIVE POUR ACCUMULATEUR AU LITHIUM

(30) Priority: 09.06.2016 JP 2016115619
(43) Date of publication of application: 17.04.2019
(73) Proprietor: Hitachi Metals, Ltd., Tokyo 108-8224 (JP)
(72) Inventor: TOKORO, Hisato, Tokyo 100-8280 (JP); GUNJI, Akira, Tokyo 100-8280 (JP); TOOYAMA, Tatsuya, Tokyo 100-8280 (JP); TAKAHASHI, Shin, Tokyo 100-8280 (JP); TAKANO, Shuichi, Tokyo 108-8224 (JP); NAKABAYASHI, Takashi, Tokyo 108-8224 (JP)
(74) Representative: Strehl Schübel-Hopf & Partner
(86) International application number: PCT/JP2017/020318
(87) International publication number: WO 2017/213002

(56) References cited:
- WO-A1-2012/098724
- JP-A- H07 272 716
- JP-A- 2003 300 731
- JP-A- 2015 228 381
- US-A- 4 469 509
- US-A1- 2010 112 447
- US-A1- 2012 326 077

## Description

### FIELD OF INVENTION

The present invention relates to a method for producing a cathode active material used for a lithium secondary battery.

### BACKGROUND ART

A lithium secondary battery has been widely utilized as a small size and light weight secondary battery having high energy density. A lithium secondary battery has characteristics of higher energy density and a smaller memory effect than other secondary batteries including a nickel-hydrogen battery and a nickel-cadmium battery.

Hereby, the application of the lithium secondary battery is growing from a small size power supply used for portable electronics and electric home appliances up to middle and large size power supplies such as a stationary power supply used for power storage facility, an uninterruptible power supply system and a power leveling device, and a driving power supply used for a ship, a train, a hybrid train, a hybrid vehicle and an electric vehicle.

When a lithium secondary battery is used for middle and large size power supplies, especially demanded is a battery with highly improved energy density. Realizing such a battery with the highly improved energy density needs a cathode and an anode both having highly improved energy density, and therefore demands an active material having a highly improved capacity to be used in a cathode and an anode.

A cathode active material having a high charge/discharge capacity is known as a lithium composite compound represented by LiMO₂ (where M is a metal element such as Ni, Co and Mn or the like) having an α-NaFeO₂ layered structure. This cathode active material shows a tendency to increase the capacity especially as a content of Ni is increased. Thus, such a cathode active material is expected to be to a promising candidate for realizing the improved energy density of a battery.

Generally, a cathode active material used for a lithium secondary battery is produced by preparing a precursor via calcinating or primarily firing a starting material in heat treatment, and finally firing the precursor thus prepared in the additional heat treatment. In the above heat treatment, typically utilized is a method for filling a starting material or a precursor in a firing vessel made of ceramics, and heating the firing vessel while passing through a firing zone conveyed by a roller.

However, in a method for heating a firing vessel while conveyed, thermal stress caused by repeated temperature rising and lowering steps damage the firing vessel, or a reaction of the vessel with a lithium source deteriorates the firing vessel to cause deformation and cracks thereof. Therefore, this method requires update of the firing vessel per prescribed period, causing a tendency to increase a production cost. Particularly, when a lithium composite compound having a high content of nickel is produced, it is necessary to keep an inside of the whole furnace under an oxidative atmosphere for sufficiently oxidizing Ni²⁺ to Ni³⁺. This necessity increases a needed amount of an oxidative gas, raising a strong tendency to extremely increase a production cost.

Hereby, proposed is a technique for applying a rotary kiln to a firing furnace that carries out a reaction of producing a lithium composite compound. A rotary kiln has such advantages that no particular firing vessel is needed and the inside of the furnace can be easily kept under an oxidative atmosphere.

For example, Patent Document 1 discloses a method for producing a cathode active material. In the method, a precursor material is fired to produce the cathode active material while a vane arranged contacting an inner wall of a rotary kiln is blowing up the precursor material to an upper part thereof, as an oxygen-containing gas is fed thereto (see claim 1 etc.).

Further, Patent Document 2 discloses a method for producing a cathode active material. In the method, a Li compound, at least one kind of metallic element compounds selected from Co, Ni and Mn, and at least one kind of metallic element compounds selected from Al and transition metals are mixed to perform a first stage firing step at a temperature of 500°C to 900°C under an oxidative atmosphere, and subsequently the resulting materials are further mixed or left to stand to perform a second stage firing step at a temperature of 800°C to 1100°C (see claim 4). Further, it is described that a rotary kiln or the like is used for performing the firing step (see paragraph 0011).

Moreover, Patent Document 3 discloses another method for producing a cathode active material. In the method, a transition metal compound containing Ni and M at a mole ratio of a / (1 - a) (where M is a metal other than Li and Ni) is mixed with lithium carbonate at a predetermined rate. Then, the resulting mixture is heated up to a predetermined region of temperature via repeatedly raising and lowering the temperature. After that, the transition metal compound is made to react with the lithium carbonate at a temperature of 550°C to 750°C, and the reactant thus obtained is further heated in a firing furnace at a temperature of 800°C to 1100°C (see claim 9). Further, it is described that a step before using the firing furnace is performed by, for example, using a rotary kiln (see paragraph 0012).

Patent document 4 reports a method for preparing a layered oxide cathode using a two step calcination procedure, wherein the first step includes a pre-calcination utilizing a rotary calciner.

### DOCUMENTS OF PRIOR ART

### PATENT DOCUMENTS

Patent Document 1: Japanese Unexamined Patent Application Publication No. Hei 11-139829
Patent Document 2: Japanese Unexamined Patent Application Publication No.2002-260655
Patent Document 3: International Patent Publication No. 2009/98835
Patent Document 4: US 2012/326077 A1

### SUMMARY OF INVENTION

### PROBLEMS TO BE SOLVED BY INVENTION

Here, when a rotary kiln is used for heat-treating a precursor of a cathode active material as disclosed in Patent Documents 1 - 3, the probability of contact between the precursor and oxygen becomes high, allowing an oxidation reaction of nickel to relatively efficiently proceed despite of the high content of nickel.

However, industrial scale production of a cathode active material with a high content of nickel in an inexpensive way or in large quantities requires a method capable of more efficiently feeding oxygen to a precursor so as to obtain a lithium composite compound containing sufficiently oxidized nickel in a short time.

Further, when lithium carbonate is used as a raw material of the precursor, it is demanded to surely remove a carbon component thus desorbed from the precursor from a firing atmosphere in order to rapidly fire a lithium composite compound having a high charge/discharge capacity.

Accordingly, an object of the present invention is to provide a method for producing a cathode active material used for a lithium secondary battery, capable of efficiently firing a precursor containing nickel in a short time.

### MEANS FOR SOLVING PROBLEMS

The present inventors have keenly investigated to address the above challenges. As a result, the inventors have found out a production method for efficiently progressing an oxidative reaction by using a firing furnace provide with two systems: a gas feeding system for supplying oxygen via directly spraying an oxidative gas onto a precursor rotating inside a furnace tube, and another gas feeding system for supplying a gas flow to discharge a carbon dioxide gas generated from lithium carbonate included in the precursor.

Namely, a method for producing a cathode active material used for a lithium secondary battery of the present invention includes the steps of: mixing lithium carbonate with a compound containing a metal element other than Li represented by the following formula (1), and firing a precursor thus obtained in the mixing step so as to produce a lithium composite compound represented by the following formula (1). The firing step includes at least a heat treating substep of heat-treating the precursor under an oxidative atmosphere while rotating the precursor inside a furnace tube of a firing furnace. The firing furnace includes a first gas feeding system that sprays an oxidative gas toward an inner circumferential surface side of the furnace tube, and a second gas feeding system that makes an oxidative gas flow in the axis direction of the furnace tube.

The heat treating substep is performed by spraying the oxidative gas through the first gas feeding system onto the precursor that flows down from an upstream side to a downstream side while rotating in the furnace tube, and simultaneously exhausting a carbon dioxide gas generated from the precursor by a gas flow of the oxidative gas driven via the second gas feeding system.

Li₁₊ₐM1O_{2+α} ----- Formula (1)

(where M1 is a metal element other than Li and includes at least Ni; a content of Ni per M1 is more than 70 atom%; "a" and "a" are the numerals satisfying the following conditions: -0.1 < a < 0.2, -0.2 < α < 0.2)

### EFFECT OF INVENTION

The present invention may provide a method for producing a cathode active material used for a lithium secondary battery, by which a precursor containing nickel can be efficiently fired in a short time.

### BRIEF DESCRIPTION OF DRAWINGS

FIG.1 is a flow chart of a method for producing a cathode active material used for a lithium secondary battery in an embodiment of the present invention.
FIG.2 is a diagram showing a schematic structure of a rotary kiln that is used to produce a cathode active material used for a lithium secondary battery.

### EMBODIMENTS FOR CARRYING OUT INVENTION

Hereinafter, a cathode active material used for a lithium secondary battery (or simply called a cathode active material) in an embodiment of the present invention, and a method for producing the cathode active material will be described in detail. Here, it should be noted that the following descriptions show only specific examples of the present invention, and the present invention is not limited to those examples. Skilled persons in the art may variously modify the present invention without apart from the technical ideas disclosed in the present specification.

### [Cathode Active Material]

A cathode active material according to the present embodiment is a lithium composite compound formed including lithium and a transition metal, having a layered rock salt-type crystal structure (or called a layered structure) assigned to a space group R-3m. The cathode active material can reversibly perform intercalation/de-intercalation of lithium ions when a voltage is applied thereto. This property enables the material to be preferably used as a cathode active material used for a lithium secondary battery (or a lithium ion secondary battery).

The cathode active material of the present embodiment is represented by the following formula (1).

Li₁₊ₐM1O_{2+α} ----- Formula (1)

(where in the formula (1), M1 is a metal element other than Li and includes at least Ni; a content of Ni per M1 is more than 70 atom%; and "a" and "a" are the numerals satisfying the following conditions: - 0.1 < a < 0.2, -0.2 < α < 0.2)

A composition having a content of nickel (Ni) more than 70 atom% per metal element (M1) other than lithium (Li) can provide a cathode active material of the present embodiment capable of realizing high energy density and a high charge/discharge capacity. Note, a content of nickel (Ni) per metal element (M1) other than lithium (Li) may be an appropriate value in the range from more than 70 atom% to less than 100 atom%. Such a high content of nickel included in the cathode active material essentially need to efficiently carry out a reaction of oxidizing Ni²⁺ to Ni³⁺.

The metal element (M1) other than lithium (Li) may include a transition metal element as well as a non-transition metal element besides nickel, and the combination thereof. Specific examples of those metal elements (M1) include manganese (Mn), cobalt (Co), aluminum (Al), titanium (Ti), zirconium (Zr), molybdenum (Mo), niobium (Nb), tungsten (W), vanadium (V), chromium (Cr), iron (Fe), magnesium (Mg), calcium (Ca), copper (Cu), zinc (Zn), and tin (Sn) or the like. Among those elements, in view of stabilizing the layered structure, preferably aluminum (Al) and/or titanium (Ti) may be included.

More preferably, a specific composition of the cathode active material of the present embodiment is represented by the following formula (2):

Li₁₊ₐNi_{b}Mn_{c}Co_{d}M2ₑO_{2+α} ----- Formula (2)

(where in the formula (2), M2 is at least one kind of elements selected from the group of Mg, Al, Ti, Zr, Mo and Nb; "a", "b", "c", "d", "e" and "a" are the numerals satisfying the following conditions: - 0.1 < a < 0.2, 0.7 < b < 0.9, 0 < c < 0.3, 0 < d < 0.3, 0 < e < 0.25, b + c + d + e = 1, and -0.2 < α < 0.2).

Next, a prescribed range of "a", "b", "c", "d", "e" and "a" in the formulae (1) and (2) will be described.

"a" in the formulae is defined as -0.1 or more and 0.2 or less. "a" represents an excess or a deficiency relative to the stoichiometric ratio of the cathode active material represented by the following general formula: LiM'O₂, that is, an excess or a deficiency amount of Li relative to the ratio of Li : M' : O = 1 : 1 : 2. Here, M' represents a metal element other than Li in the formulae (1) and (2). The less a content of lithium becomes, the higher a valence of the transition metal before charging becomes. Hence, a degree of valence change in the transition metal is decreased when lithium is de-intercalated, leading to an improvement in charge/discharge cycle performance of the cathode active material. On the other hand, an excess content of lithium decreases a charge/discharge capacity of the cathode active material.

Accordingly, prescribing "a" in the above defined range enables an improvement in the charge/discharge cycle performance of the cathode active material as well as an increase in the charge/discharge capacity. More preferably, a range of "a" is -0.05 or more and 0.1 or less. When "a" is defined as -0.05 or more, a sufficient amount of lithium needed for a charge/discharge process is secured, which enables aiming for a highly increased capacity of the cathode active material. Alternatively, when "a" is defined as 0.1 or less, the charge can be sufficiently compensated via the valence change in the transition metal. This enables realization of a high charge/discharge capacity as well as preferable charge/discharge cycle performance.

In the above described formulae, "b" is defined as more than 0.7 and 0.9 or less. A larger content of nickel is advantageous for increasing the charge/discharge capacity. In contrast, an excess content of nickel may deteriorate the thermal stability of the cathode active material. Therefore, prescribing "b" in the above defined range allows the cathode active material to stably have a highly increased capacity. Herein, more preferably, a range of "b" is 0.75 or more and 0.90 or less. When "b" is defined as 0.75 or more, the charge/discharge capacity is more increased.

In the above described formulae, "c" is defined as 0 or more and less than 0.3. Addition of manganese can stably preserve the layered structure even though lithium is de-intercalated via a charge process. In contrast, an excess content of manganese decreases a content of other transition metals like nickel or the like, resulting in a decrease in the charge/discharge capacity of the cathode active material. Accordingly, prescribing "c" in the above defined range enables a crystal structure of the cathode active material to be stably preserved even though intercalation/de-intercalation of lithium ions is repeatedly performed via charge/discharge processes.

Therefore, the cathode active material can achieve a high charge/discharge capacity as well as preferable charge/discharge cycle performance and thermal stability. Herein, more preferably, a range of "c" is defined as 0.03 or more and 0.25 or less. When "c" is defined as 0.03 or more, the crystal structure of the cathode active material is more stabilized. In contrast, when "c" is defined as 0.25 or less, a content of other transition metals like nickel is increased, preventing deterioration of a charge/discharge capacity of the cathode active material. An especially preferable range of "c" is defined as 0.05 or more and 0.15 or less.

Next, in the above described formulae, "d" is defined as 0 or more and less than 0.3. Addition of cobalt increases the charge/discharge cycle performance without largely deteriorating the charge/discharge capacity. In contrast, an excess content of cobalt highly raises a raw material cost, possibly causing a disadvantage in industrial production of the cathode active material. Accordingly, prescribing "d" in the above defined range enables both the high charge/discharge capacity and the preferable charge/discharge cycle performance, with achieving the good productivity.

Herein, more preferably, a range of "d" is defined as 0.10 or more and 0.25 or less. When "d" is defined as 0.10 or more, the charge/discharge capacity and the charge/discharge cycle performance are more improved. In contrast, when "d" is defined as 0.25 or less, a cost of the raw materials becomes lower, resulting in enhanced productivity of the cathode active material.

In the above described formulae, "e" is defined as 0 or more and 0.25 or less. Addition of at least one kind of elements (M2) selected from the group of Mg, Al, Ti, Zr, Mo and Nb can improve stability of the crystal structure and electrode performance including the charge/discharge cycle performance while maintaining electrochemical activity of the cathode active material. In contrast, an excess content of M2 decreases a content of other transition metals like nickel or the like, causing a decrease in the charge/discharge capacity of the cathode active material. Accordingly, prescribing "e" in the above defined range enables both the high charge/discharge capacity and the good electrochemical property to be achieved.

Further, in the above described formulae, preferably M2 contains at least titanium. Titanium mainly exists in a form of Ti³⁺ or Ti⁴⁺ in the cathode active material. Titanium is oxidized from Ti³⁺ to Ti⁴⁺ during a charge process, while reduced from Ti⁴⁺ to Ti³⁺ during a discharge process. This change electrochemically contributes to the electrode property. In other words, M2 can be formed of Ti and M3. Herein, M3 represents at least one kind of elements selected from the group of Mg, Al, Zr, Mo and Nb. Preferably, titanium has the following ratio per stoichiometric ratio of lithium. Namely, the coefficient in the formulae is preferably defined as more than 0 and 0.25 or less, more preferably 0.005 or more and 0.15 or less.

Addition of titanium realizes an improvement effect on the charge/discharge cycle performance without largely deteriorating the charge/discharge capacity. In contrast, an excess content of titanium decreases a content of other transition metals like nickel and do on, leading to a decrease in the charge/discharge capacity of the cathode active material. Hence, prescribing the coefficient of titanium in the above defined range can achieve an appropriate electrode property without largely changing the preparation conditions of the cathode active material. Further, a relatively low cost and an easy availability of titanium allow titanium to be a suitable industrial material. On the other hand, the coefficient of M3 may be set to 0.10 or more and 0.245 or less.

In the above described formulae, preferably an atomic ratio between Ti³⁺ and Ti⁴⁺ (i.e., Ti³⁺/Ti⁴⁺) based on the XPS (X-ray Photoelectron Spectroscopy) is set to 1.5 or more and 20 or less, in the initial state in which the cathode active material has not been charged/discharged. When electrochemically contributing Ti³⁺ is contained in a 1.5-fold to a 20-fold larger content than Ti⁴⁺, it is possible to effectively prevent a decrease in the charge/discharge capacity caused via reduction of Ni from Ni³⁺ to Ni²⁺ in the initial state of the cathode active material. Further, when Ni²⁺ is generated in the cathode active material associated with charge/discharge cycles, oxidation of Ti from Ti³⁺ to Ti⁴⁺ performs charge compensation.

This facilitates easy preservation of a crystal structure of the cathode active substrate. Moreover, nickel ions can be prevented from being exposed on a surface of the cathode active material, which suppresses a decomposition reaction of the electrolyte solution thus caused following the charge/discharge cycles.

Here, the condition of the atomic ratio (i.e., Ti³⁺/Ti⁴⁺) less than 1.5 cannot sufficiently prevent a decrease in the charge/discharge capacity thus caused following the charge/discharge cycles. This may make it more difficult to realize a high charge/discharge capacity. Alternatively, the condition of the atomic ratio (i.e., Ti³⁺/Ti⁴⁺) more than 20 causes excessive growth of particles when the cathode active material is fired. This may result in a decrease in the charge/discharge capacity.

In the above described formulae, "α" is defined as -0.2 or more and 0.2 or less. Herein, "α" represents an excess or a deficiency of oxygen (O) relative to the stoichiometric ratio of the cathode active material represented by the chemical formula LiM'O₂. When "α" is in the above defined range, defects of the crystal structure of the cathode active material are decreased, thereby to achieve an excellent electrochemical property. However, depending on the performance demanded for the cathode active material, preferably "α" is set to -0.1 or more and 0.1 or less from the viewpoint of more stably preserving the layered structure.

The cathode active material of the present embodiment may take a powdery form, for example. The powdery cathode active material may include a primary particle of a lithium composite compound in which the respective particles are separated each other. Further, the powdery cathode active material may include a secondary particle formed of the plurality of primary particles bonded via granulating and sintering processes. The secondary particle may be made by any of dry granulation and wet granulation. As a granulation device, for example, granulators such as a spray dryer and a tumbling fluidized bed apparatus may be utilized.

A BET specific surface area of the cathode active material is preferably set to 0.2 m²/g or more and 2.0 m²/g or less. When the BET specific surface area of the powdery cathode active material formed of agglomerates of primary and secondary particles is in the above described range, fillability of the cathode active material in the cathode may be improved. Thus, this improvement allows production of a cathode having higher energy density. Note, the BET specific surface area can be measured by using, for example, a specific surface area automatic analyzer.

A crystal structure of the cathode active material can be confirmed by, for example, X-ray diffraction analysis (XRD) or the like. Further, a composition of the cathode active material can be confirmed by, for example, inductivity coupled plasma (ICP) emission analysis and atomic absorption spectrometry (AAS) or the like.

Preferably, particle fracture strength of the cathode active material is 50 Mpa or more and 100 Mpa or less. When the particle fracture strength per particle of the cathode active material is in the above described range, particles of the cathode active material are hardly fractured in a process of producing an electrode. This feature prevents coating defects like peeling from occurring when a cathode mixture layer is formed by applying a cathode mixture slurry containing the cathode active material onto a cathode collector. The particle fracture strength of the cathode active material may be measured by, for example, a microcompression testing machine.

### [Method for Producing Cathode Active Material]

A method for producing the cathode active material of the present invention relates to a method for manufacturing a cathode active material used for a cathode of a lithium secondary battery. The method includes the step of preparing a lithium composite compound having a layered rock salt type crystal structure represented by the above described formula (1). Herein, preferably a specific composition of the lithium composite compound is represented by the above described formula (2) .

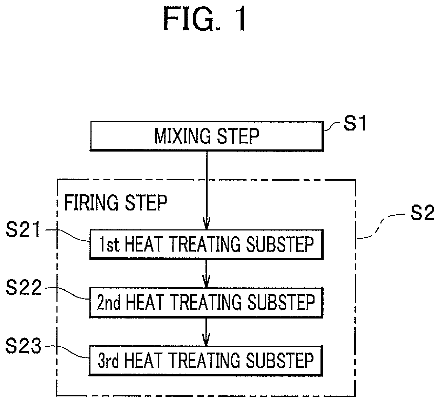

FIG.1 is a flow chart of the method for producing the cathode active material in an embodiment of the present invention.

As shown in FIG.1, the method for producing the cathode active material in an embodiment of the present invention includes a mixing step S1 and a firing step S2. A precursor is prepared from raw material compounds through the mixing step S1, and the precursor is fired in the firing step S2. Hence, a lithium composite compound to be used as a cathode material of a lithium secondary battery (or a lithium ion secondary battery) can be prepared. The production method of the present embodiment includes at least a heat treating substep as a substep included in the firing step S2. The method is performed via heat-treating the precursor of the lithium composite compound before being fired, while rotating in the rotary kiln used as a firing furnace.

In the mixing step S1, a lithium-containing compound is mixed with a compound containing a metal element other than Li composing the cathode active material. Here, as a lithium-containing compound, at least lithium carbonate is used. Lithium carbonate is more stably supplied, more available and inexpensive than lithium acetate, lithium nitrate, lithium hydroxide, lithium chloride and lithium sulfate and so on. Further, lithium carbonate has a high melting point, which less damages a manufacturing device. This property provides excellent industrial usability and practicability thereof.

As a compound containing a metal element other than Li composing the cathode active material, a nickel-containing compound, a manganese-containing compound, a cobalt-containing compound, and a compound containing another metal element like M2 are mixed in use.

As a nickel-containing compound, for example, an oxide, a hydroxide, a carbonate and an acetate of nickel may be used. Among those compounds, especially an oxide or a hydroxide of nickel may be preferably used. Such an oxide and a hydroxide of nickel, different from a carbonate and an acetate thereof, do not generate a large amount of a carbon dioxide gas in the firing step. Thus, a lithium composite compound having a high nickel content and high purity can be stably manufactured.

As a manganese-containing compound and a cobalt-containing compound, for example, oxides, hydroxides, carbonates and acetates of manganese and cobalt respectively may be used. Among those compounds, especially oxides, hydroxides or carbonates of those metals are preferably used. Further, as a compound containing other metal element like M2, for example, a carbonate, an oxide, a hydroxide, an acetate and a nitrate of the metal may be used. Among those compounds, especially a carbonate, an oxide or a hydroxide of the metal are preferably used.

In the mixing step S1, specifically, respective raw material compounds are weighed at the predetermined ratio of the elemental composition corresponding to the above defined formulae, and then those compounds are ground and mixed together, thereby to prepare a powdery mixture including all of the respective compounds. Preferably, the respective compounds are ground until each of the mean particle diameters becomes less than 1 µm from the viewpoint of uniformly mixing to have a uniform particle size. As a grinder for grinding the compounds, for example, a typical precision grinder such as a boll mill, a jet mill, and a sand mill may be used.

When grinding the raw material compound, preferably a wet-grinding method is used, and more preferably a wet-grinding method especially using water as a dispersion medium is used. A solid-liquid mixture thus obtained by the wet-grinding method may be dried using a drier. As a dryer, for example, a spray dryer, a fluidized bed dryer and an evaporator can be used.

In the firing step S2, the precursor thus obtained through the mixing step S1 is fired so as to produce a lithium composite compound having a layered structure. The firing step S2 includes at least a heat treating substep of heat-treating the precursor of the lithium composite compound before fired while rotating it in a rotary kiln used as a firing furnace. Next, the rotary kiln used in the firing step S2 will be described in detail.

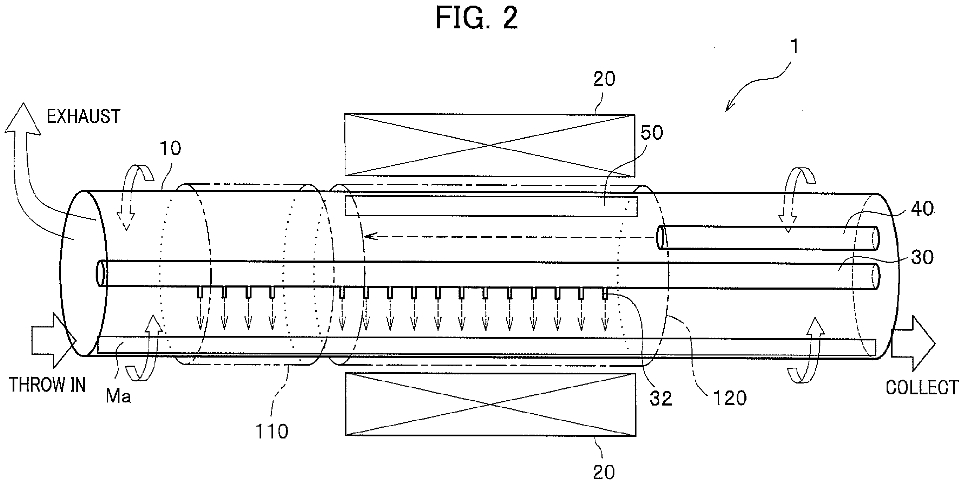

FIG.2 is a diagram showing a schematic structure of a rotary kiln that is used to produce a cathode active material used for a lithium secondary battery.

As shown in FIG.2, the rotary kiln 1 includes a furnace tube 10, a heater 20, a first gas feeding pipe 30, a second gas feeding pipe 40, and a lifter 50. The rotary kiln 1 is used for heat-treating a precursor of a powdery lithium composite compound as a to-be-treated material.

The furnace tube 10 has a hollowed substantially columnar shape, including a throw-in part for supplying a to-be-treated material Ma at one end in the longitudinal direction of the tube, and a collecting part for collecting a heat treated material at the other end of the tube. The furnace tube 10 is arranged inclined to the horizontal in the longitudinal direction so that the throw-in part for the to-be-treated material Ma is located at a higher position than the collecting part. The precursor of the lithium composite compound is thrown into inside the furnace tube 10 by a powder feeding device (not shown) arranged at the throw-in part.

Then, the precursor thus thrown in flows inside the furnace tube 10 in the longitudinal direction thereby to be heat-treated. An inclination angle of the furnace tube 10 is not specifically limited. However, typically the inclination angle is set to the range from 0.5° to 3°. Note, in the present specification, one side provided with the throw-in part in the longitudinal direction of the furnace tube 10 is defined as "an upstream side", and the other side provided with the collecting part is defined as "a downstream side".

The furnace tube 10 is connected to a power unit like a motor (not shown) through a driving gear or a roller. The furnace tube 10 is configured to rotate on a center axis of the columnar shape as a rotating pivot by motor drive. Accordingly, the precursor (Ma) of the lithium composite compound thus thrown into the furnace tube 10 from the throw-in part flows down inside the furnace tube 10 while rotating as the furnace tube 10 rotates. Then, the precursor is collected by a powder collecting device (not shown) of the collecting part. Here, a rotation rate of the furnace tube 10 is not specifically limited. However, typically the rotation rate is set to the range from 0.5 rpm to 3 rpm.

Preferably the furnace tube 10 is made of ceramics, more preferably ceramics containing no silicate components, and most preferably high-purity alumina with 4N or higher. The furnace tube 10 made of ceramics does not discharge any harmful components like hexavalent chromium, different from the tube made of a metal like stainless steel. Further, that furnace tube 10 prevents any contamination of the metal components into the to-be-target material Ma.

Moreover, the furnace tube 10 made of ceramics containing no silicate components makes it more difficult that the lithium components contained in the precursor of the lithium composite compound react with the furnace tube 10 than a furnace tube made of s silicate like mullite. Such a silicate free furnace tube 10 decreases a possibility of deteriorating or damaging the furnace tube 10. Here, if the furnace tube 10 is made of a material exhausting no harmful components like chromium, the furnace tube 10 may be made of a metal such as Ni, W, Mo and Ti or an alloy made of those metals as a main component.

A heater 20 is arranged around a columnar body of the furnace tube 10. The heater 20 covers a heating zone 120 which is a part of a section of the furnace tube 10 in the longitudinal direction thereof, and shown by a dashed line in FIG.2. The heater 20 can raise a temperature of the heating zone 120 up to a target temperature.
Further, the heater 20 preheats a preheating zone 110 at a temperature lower than the target temperature. The preheating zone 110 is located at an upstream side of the heating zone 120 and has a predetermined length shown by a two-dot chain line in FIG.2.

Hence, when the precursor of the lithium composite compound is thrown into the furnace tube 10 during the operation of the heater 20, first the precursor is preheated at a temperature lower than the target temperature in the preheating zone 110. After that, the precursor is further heated to the target temperature in the heating zone 120 while rotating, thereby subjected to the heat treatment. Note, a location and the number of the heaters 20 are not specifically limited as long as the heater 120 can uniformly heat-treat the heating zone 120. If the preheating zone 110 is secured not to undergo any rapid heat treatment, the heater 20 may be arranged intensively in the same place, or separately arranged in multiple places.

The first gas feeding tube 30 is included in the first gas feeding system that supplies an oxidative gas from a gas source (not shown) inside the furnace tube 10. The first gas feeding tube 30 injects an oxidative gas toward an inner circumferential surface of the furnace tube 10 when the to-be-treated material Ma is heat-treated. Here, the first gas feeding tube 30 is arranged along inside the furnace tube 10 in the longitudinal direction, and located in the substantially entire length of the furnace tube 10 from a downstream side to an upstream side thereof. The first gas feeding tube 30 is arranged in the longitudinal direction inside the furnace tube 10 and has a plurality of injection ports 32 each of which vertically opens to a lower side. Each of the injection ports 32 sprays an oxidative gas like a shower thus transferred by the pressure from a gas source (not shown) toward an inner circumferential surface at a lower side of the furnace tube 10. Specifically, an oxidative gas is sprayed by the first gas feeding system onto the precursor while rotating and subjected to the heat treatment. The precursor is directly supplied with oxygen, facilitating the efficient progress of the oxidation reaction.

Further, a carbon dioxide gas generated from the precursor is blown up by the oxidative gas thereby to be rapidly exhausted from the vicinity of the precursor. Namely, this exhausting process prevents another reaction of the precursor with the carbon dioxide gas thus generated from the precursor and staying inside the furnace tube 10. Hereby, this suppresses the lithium carbonate from being regenerated and inhibiting the formation of a lithium composite compound.

Preferably, the first gas feeding tube 30 is provided so that the tube 30 not only efficiently feeds oxygen and exhausts the carbon dioxide gas but also adjustably controls a spray amount, a spray angle and an oxygen concentration of the oxidative gas from the viewpoint of preventing the powdery to-be-treated material from scattering. For example, the spray amount can be adjusted by controlling a flow rate of the first gas feeding system, or the number of the spray ports 32 thus opened by setting the spray ports 32 under an openable/closable condition. Further, the spray angle can be adjusted by making the first gas feeding tube 30 rotatable on the center axis working as a rotation pivot. For example, the spray angle may be set to mare than 0° and 45° or less in the forward direction or the reverse direction relative to the rotation direction of the furnace tube 10, to perform the spraying operation.

Moreover, the spray angle can be adjusted by moving the first gas feeding tube 30 in the horizontal direction inside the furnace tube 10. For example, the first gas feeding tube 30 may be placed at a position apart from the central axis of the furnace tube 10, to perform the spraying operation. Furthermore, the oxygen concentration may be controlled by arranging an oxygen concentration detector to be located near an inlet or an outlet portion, or any position of the furnace tube 10 to monitor and control the oxygen amount so that the detected oxygen concentration becomes a predetermined value. Additionally, the above described spray amount, spray angle and oxygen concentration may be appropriately adjusted in combination. Note, a carbon dioxide concentration detector may be provided instead of the oxygen concentration detector or using both in combination. An oxygen amount may be adjusted by monitoring or controlling the amount so that the detected carbon dioxide concentration keeps a prescribed value.

The second gas feeding tube 40 is included in the second gas feeding system that supplies an oxidative gas inside the furnace tube 10 from a gas source (not shown). When the to-be-treated material Ma is heat-treated, the second gas feeding tube 40 generates a flow of the oxidative gas inside the furnace tube 10 downward in the axis direction of the furnace tube 10. The oxidative gas may be made to flow from an upstream side to a downstream side of the furnace tube 10. However, preferably the oxidative gas is made to flow from a downstream side to an upstream side of the furnace tube 10. Here, the second gas feeding tube 40 is arranged at a downstream side compared to the heating zone 120 inside the furnace tube 10, and opens toward an upstream side of the furnace tube 10.

Further, the second gas feeding tube 40 is located at a higher position than the first gas feeding tube 30, thereby opened to a higher space than the first gas feeding pipe 30. The second gas feeding tube 40 makes the oxidative gas flow in the substantially horizontal direction above the first gas feeding tube 30. After the resulting oxidative gas passes through the heating zone 120 and a preheating zone 110, the gas is exhausted outside from an exhaust port (not shown) arranged at an upstream side of the furnace tube 10. Namely, a flow of the oxidative gas is generated inside the furnace tube 10 by the second gas feeding system. This gas flow exhausts a carbon dioxide gas thus generated from the precursor during the heat treatment thereby to carry the carbon dioxide gas along with the oxidative gas flow.

Here, when the oxidative gas generated by the second gas feeding system flows oppositely to the flowing direction of the precursor, a concentration of the carbon dioxide gas becomes lower as approaching a downstream side of the furnace tube 10. This lowering concentration of the carbon dioxide gas surely decreases a carbon quantity mixed in the to-be-treated material Ma that is finished with the heat treatment at the downstream side. Note, a gas feeding amount and a feeding direction of the oxidative gas in the second gas feeding tube 40 can be appropriately controlled.

Here, as for the oxidative gas supplied by the first and second gas feeding systems, a gas facilitating a reaction with an oxygen element such as an oxygen gas and an oxygen concentrated air or the like may be used. Preferably, the oxidative gas supplied by the first and second gas feeding systems has an oxygen concentration of 90% or higher, more preferably 95% or higher, and further more preferably 100%.

A lifter 50 is arranged on the inner circumferential surface of the furnace tube 10. The lifter 50 is protruded in the circumferential direction from a part of the inner circumferential surface of the furnace tube 10 to the inner hole thereof. The lifter 50 lifts the to-be-treated material Ma that is agitated as the furnace tube 10 rotates. More specifically, agitation of the lifter 50 makes the precursor flow while replacing a surface power with a bottom powder of the precursor in a powdery form.

This agitation increases a probability of contact with oxygen as well as the uniform contact. At the same time, the carbon dioxide gas generated from the precursor is efficiently exhausted from inter-particle gaps of the powder. Accordingly, agitating the precursor by the lifter 50 under the oxidative gas supplied by the first and second gas feeding systems efficiently facilitates the supply of the oxygen gas and the exhausting of the carbon dioxide gas. The facilitated gas supplying and exhausting operation results in large enhancements of the solid phase reaction to produce the lithium composite compound.

The lifter 50 may be provided in an appropriate shape and the number. Specifically the lifter 50 may be provided, for example, in a blade shape, a projected line shape, a pipe shape, and a prismatic shape. Further, the plurality of lifters 50 may be arranged at an appropriate interval in the circumferential direction of the furnace tube 10. Moreover, the lifters 50 may be continuously located having no gap, or separately located having some gaps.

The lifter 50 may be arranged along the entire length inside the furnace tube 10. However, preferably, among the portions of the inner circumferential surface of the furnace tube 10, the lifter 50 is arranged only in a directly heated zone (i.e., heating zone 120) by the heater 20 at a target temperature during the heat treatment. That is, preferably no lifter 50 is arranged at the upstream and downstream sides of the heating zone 120. Note, generation of the carbon dioxide gas is remarkably large at the preheating zone 110 located at the upstream side of the heating zone 120. If the powdery precursor is agitated at such a zone, the precursor reacts with the carbon dioxide gas to produce lithium carbonate, raising a possibility of preventing a reaction forming a lithium composite compound.

In contrast, if the lifter 50 is arranged only in the heating zone 120, the solid phase reaction may be sufficiently accelerated. Further, no arrangement of the lifter 50 at the upstream and downstream sides of the heating zone 120 may avoid an event leading to a decrease in a collected yield of the product. The decrease in the yield may be caused because very fine powders of the precursor thus excessively agitated more than necessary are discharged along with a flow of the oxidative gas.

A rotary kiln 1 preferably includes an exhaust port for discharging an atmospheric gas in the furnace tube 10 on a wall side of the furnace tube 10 at the upstream side thereof. If the exhaust port is arranged on the wall side instead of a top face side of the furnace tube 10, the carbon dioxide gas having a high specific density can be surely exhausted along with a flow of the oxidative gas. More specifically, a position for arranging an exhaust port is preferably on an inner surface at the upstream side in the furnace tube 10, and more preferably on a lower half part of the inner surface located lower than the rotation axis of the furnace tube 10.

The above described rotary kiln 1 continuously performs exhausting the carbon dioxide gas and supplying the powdery precursor, which enables the heat treatment of the precursor to be performed in a short time. Particularly, oxygen is supplied to the furnace tube 10 of a closed space, allowing the heat treatment to be performed in a lower cost than a conveyer type furnace performing the heat treatment in an open space. Further, the first gas feeding system directly sprays the oxidative gas onto the precursor. This feature can supply a high concentration of oxygen to the precursor, and blow up the carbon dioxide gas thus generated from the precursor thereby to be surely separated and removed to the outside of the furnace. Moreover, the second gas feeding system rapidly exhausts the carbon dioxide gas thus blown up upward inside the furnace tube 10, preventing the precursor thus heat-treated from contacting the carbon dioxide gas.

As mentioned above, the first gas feeding system alone cannot exhaust the carbon dioxide gas generated from the precursor to the outside of the furnace tube 10, allowing the gas to stay therein. Similarly, the second gas feeding system alone can hardly remove the carbon dioxide gas staying in inter-particles gaps of the powdery precursor. However, combined usage of the first and second gas feeding systems may efficiently continue the circulation of supplying oxygen and exhausting the carbon dioxide gas, which enables production of a heat-treated material having less crystal defects and impurities.

Next, the firing step S2 will be described in detail.

As shown in FIG.1, the firing step S2 preferably includes a first heat treating substep S21 of forming a first precursor, a second heat treating substep S22 of forming a second precursor, and a third heat treating substep S23 of performing a finishing heat treatment. A rotary kiln 1 having a structure shown in FIG.2 may be used in any one of the above described heat treating substeps. However, preferably the rotary kiln 1 is used in at least one of the second heat treating substep S22 and the third heat treating substep S23, more preferably used in the second heat treating substep S22, and further more preferably used in both the second heat treating substep S22 and the third heat treating substep S23.

In the first heat treating substep S21, a first precursor is obtained by heat-treating the mixture thus obtained in the mixing step S1 at a heat treatment temperature of 200°C or higher and 400°C or lower, for a period of 0.5 hr or longer and 5 hr or shorter. The first heat treating substep S21 is performed mainly for the purpose of removing a highly volatile component like water or the like that prevents a reaction of preparing the cathode active material via the mixture thus obtained in the mixing step S1. In the substep, removed are a carbon dioxide gas and water generated associated with the thermal decomposition of raw materials like lithium carbonate and the combustion of impurities from the mixture.

In the first heat treating substep S21, a temperature of the heat treatment less than 200°C raises a possibility that a combustion reaction of impurities and a thermal decomposition reaction of the raw materials are insufficiently performed. On the contrary, a temperature of the heat treatment more than 400°C accelerates recrystallization of the lithium composite compound in this substep. This raises a possibility that a crystal structure having many defects is formed in the presence of the gas that contains water and impurities.

However, a temperature of the heat treatment in the above defined range may sufficiently remove the impurities or the like, allowing production of the first precursor suitable for the firing step subsequently carried out.

A temperature of the heat treatment in the first heat treating substep is preferably at 250°C or higher and 400°C or lower, more preferably at 250°C or higher and 380°C or lower. A temperature of the heat treatment in the above defined range may not only efficiently remove the water and impurities but also prevent progress of the crystallization in this substep. Note, a time of the heat treatment in the first heat treating step S1 may be set to, for example, an appropriate period, depending on a temperature of the heat treatment, amounts of water and impurities contained in the mixture, and a removal level of the water and impurities.

The first heat treating substep S21 may be carried out by using an appropriate heat treating device. More specifically, for example, a roller hearth kiln, a tunnel kiln, a pusher furnace, a rotary kiln and a batch furnace or the like. Note, when a rotary kiln 1 is not used in the second heat treating substep S22 and the third heat treating substep S23, the above described roller hearth kiln and tunnel kiln may be used.

The first heat treating substep S21 may be carried out under an oxidative gas atmosphere or under a non-oxidative gas atmosphere. As the oxidative gas atmosphere, any one of an oxygen gas atmosphere and an air atmosphere may be used. The air atmosphere may simplify a structure of the heat treating device so as to reduce a production cost of the cathode active material. Further, as for a reduced pressure atmosphere, for example, a condition of reduced pressure with an appropriate degree of vacuum like the atmospheric pressure or less may be used.

Preferably, the first heat treating substep S21 may be carried out under a gas flow condition of the atmospheric gas, or under an exhausting condition by a pump. The heat treatment thus carried out under the above conditions may efficiently remove a gas generated from the mixture. Flow rates of the exhaust removed by a flow of the atmospheric gas and a pump are preferably set to larger than a volume of the gas generated from the mixture. The volume of the gas generated from the mixture may be calluculated, for example, by estimating a weight of the generated gas based on the weights of the raw materials contained in the mixture and the ratio of the components assumed to be removed from the raw materials, and the conditions of the temperature thus determined.

In the second heat treating substep S22, the first precursor thus obtained in the first heat treating substep S21 is heat-treated at a temperature of the heat treatment of 450°C or higher and 900°C or lower, for a time of 0.1 hr or longer and 50 hr or shorter, whereby a second precursor is obtained. The second heat treating substep S22 is carried out for the purpose of mainly oxidizing nickel in the first precursor from divalent one to trivalent one to crystallize a lithium composite compound having a layered structure. Namely, the substep is a heat treatment step of forming a layered structure associated with the oxidative reaction of nickel in the first precursor via using the reactants of lithium carbonate (Li₂CO₃) and an oxide of M' (M'O).

Here, a temperature of the heat treatment less than 450°C in the second heat treating substep S22 decreases a reaction rate of the solid phase reaction, allowing an excess amount of lithium carbonate to remain unreacted. This remaining carbonate raises a possibility that a generated amount of the carbon dioxide gas increases in the third heat treating substep S23. In contrast, a temperature of the heat treatment more than 900°C allows particles of the lithium composite compound to excessively grow up, causing a high possibility that no cathode active material with a large capacity is obtained.

However, a temperature of the heat treatment defined in the above range may obtain a second precursor including little amount of large size crystalline particles although the solid phase reaction proceeds in all the materials. Here, a reaction of lithium carbonate proceeding in the second heat treating substep S22 is represented by the following formula (3).

Li₂CO₃ + 2M'O + 0.5O₂ → 2LiM'O₂ + CO₂ -- Formula (3)

A time of the heat treatment in the second heat treating substep S22 may be preferably set to 600°C or higher. The temperature of 600°C or higher more improves the reaction efficiency of the formula (3). Further, a temperature of the heat treatment in the second heat treating substep S22 is preferably set to 800°C or lower. The temperature of 800°C or lower more prevents growth of the large size crystalline particles.

More preferably, a time of the heat treatment in the second heat treating substep S22 is set to a period of 0.1 hr or longer and 5 hr or shorter. The time of the heat treatment for 5 hr or shorter shortens a time needed for producing the cathode active material, resulting in improvement of the productivity.

Realizing a high capacity of the cathode active material with a nickel content more than 70 atom% particularly needs sufficient oxidization to convert a valence of nickel from bivalence to trivalence. Bivalent nickel is easily replaced to a lithium site in a layered structure of LiM'O₂, raising a decrease in the capacity of the cathode active material. Therefore, in the second heat treating substep S22, it is preferable to heat-treat the first precursor under the oxidative atmosphere sufficiently supplied with oxygen so as to surely convert the valence of nickel from bivalence to trivalence. Further, a carbon dioxide gas generated in the formula (3) inhibits progress of the reaction of the formula (3), leading to a decrease in the capacity of the cathode active material. Hence, in the second heat treating substep S22, preferably the heat treatment is carried out under a gas flow in which the carbon dioxide gas is hardly retained.

More specifically, the second heat treating substep S22 is preferably carried out under an oxidative atmosphere having an oxygen concentration of 90% or more, more preferably an oxygen concentration of 95% or more, and further more preferably an oxygen concentration of 100%. Further, preferably the second heat treating substep S22 is carried out under a flow of the oxidative gas. The heat treatment performed under a flow of the oxidative gas with a high oxygen concentration can surely oxidize nickel, and further surely remove a carbon dioxide gas generated in the formula (3).

Preferably, the second heat treating substep S22 is conducted by the heat treatment while rotating the first precursor. The heat treatment with rotating the first precursor can increase a probability that the first precursor in a powdery form contacts oxygen, allowing sufficient oxidation of nickel and so on. Further, rotating the powdery first precursor can prevent the generated carbon dioxide gas from staying in the inter-particles gaps. Thus, this rotating operation can efficiently removes the carbon dioxide gas thereby to facilitate the solid state reaction.

When the second heat treating substep S22 is carried out by using a rotary kiln 1 having a structure shown in FIG.2, the substep is performed by throwing the first precursor into the furnace pipe 10 set under an oxidative atmosphere, operating the first and second gas feeding systems together with the heater 20, and rotating the furnace pipe 10 at a predetermined rate. Specifically, the heat treatment is carried out at a predetermined temperature and time so that the oxidative gas is sprayed by the first gas feeding system onto the first precursor that rotates and flows from an upstream side to a downstream side in the furnace pipe 10 of the rotary kiln 1 set under the oxygen atmosphere at an oxygen concentration of 90% or higher. Further, at the same time a carbon dioxide gas thus generated from the first precursor is exhausted by a flow of the oxidative gas caused via the second gas feeding system.

Herein, preferably the carbon dioxide gas thus generated from the first precursor is exhausted through an exhaust port provided on a side surface at an upstream side of the furnace pipe 10 in the axis direction of the furnace pipe 10. Further, preferably the heat treatment is carried out by adjusting at least one of a spray amount of the oxidative gas, a spray angle and an oxygen concentration controlled by the first gas feeding system, to be dependent on the input amount of the first precursor, the temperature of the heat treatment, the oxygen concentration of the atmosphere and the rotating rate of the furnace pipe 10.

However, it should be noted that the second heat treating substep S22 is mainly performed for such a purpose that a large amount of the carbon dioxide gas thus generated from the first precursor as mentioned above is prevented from becoming an obstacle factor of the reaction. Hereby, it is preferable to generate the carbon dioxide gas out as much as possible, and efficiently exhaust the resulting gas from the inside of the furnace pipe 10 in the second heat treating substep S22, in view of conducting a series of the steps.

As described hereinbefore, the second gas feeding system exhausting the carbon dioxide gas is highly important for the second heat treating substep S22. Accordingly, in the second heat treating substep S22, preferably at least a supply amount of the oxidative gas and a spraying pressure of the second feeding pipe 40 are controlled, and more preferably both the second gas feeding system and the first gas feeding system are controlled.

In the third heat treating substep S23, a lithium composite compound having a layered structure is obtained by heat-treating the second precursor thus obtained in the second heat treating substep S22 at a heat treatment temperature of 700°C or higher and 900°C or lower. The third heat treating substep S23 is mainly carried out for the purpose of not only sufficiently oxidizing nickel in the second precursor to convert the nickel from bivalent one to trivalent one but also growing crystal particles of the lithium composite compound having a layered structure. Namely, this substep is a heat treatment step of performing an oxidative reaction of nickel in the second precursor, and growing crystal particles of the lithium composite compound.

Here, a temperature of the heat treatment less than 700°C in the third heat treating substep S23 raises a possibility that particles of the lithium composite compound do not smoothly grow up. In contrast, a temperature of the heat treatment more than 900°C raises a high possibility that no cathode active substrate having a high capacity is obtained due to excessive growth of the particles of the lithium composite compound and the formation of bivalent nickel generated via decomposition of the layered structure.

However, a temperature of the heat treatment thus defined as described above can efficiently produce a lithium composite compound having a high capacity.

Here, preferably the third heat treating substep S23 is carried out for a heat treatment time of 0.1 hr or longer and 50 hr or shorter, more preferably 0.5 hr or longer and 5 hr or shorter. In the third heat treating substep S23, a low oxygen partial pressure needs heat for facilitating the oxidative reaction of nickel. Therefore, in the third heat treating substep S23, insufficient oxygen supply to the second precursor needs to increase the temperature of the heat treatment. However, the increase in the temperature of the heat treatment inevitably decomposes the layered structure, resulting in failure to produce a lithium composite compound having a high capacity. Here, despite of this phenomenon, a time of the heat treatment for 0.1 hr or longer enables the second precursor to sufficiently react with oxygen.

More specifically, the third heat treating substep S23 is carried out preferably under an oxidative atmosphere at an oxygen concentration of 90% or higher, more preferably under an oxidative atmosphere at an oxygen concentration of 95% or higher, and further more preferably under an oxidative atmosphere at an oxygen concentration of 100%. Further, the third heat treating substep S23 is carried out preferably under a flow of the oxidative gas. The heat treatment conducted under a flow of the oxidative gas having a high oxygen concentration hardly decreases an oxygen partial pressure of the atmosphere, which allows nickel to be surely oxidized even without raising the temperature of the heat treatment.

In the third heat treating substep S23, the heat treatment may be performed by leaving the second precursor to stand, or by rotating the second precursor. The heat treatment with rotating the second precursor increases a probability that the second precursor in a powdery form contacts oxygen, enabling sufficient oxidation of nickel or the like. Further, rotating the powdery second precursor has an advantage to more uniformly fire the lithium composite compound.

When the third heat treating substep S23 is carried out by using a rotary kiln 1 having a structure shown in FIG.2, the substep is conducted by throwing the second precursor into the furnace tube 10 set under an oxidative atmosphere, operating the first and second gas feeding systems together with the heater 20, and rotating the furnace tube 10 at a predetermined rotating rate. Namely, the heat treatment is carried out at a predetermined temperature, for a predetermined time of the heat treatment by spraying an oxidative gas via the first gas feeding system onto the second precursor rotating and flowing from an upstream side to a downstream side in the furnace tube 10 of the rotary kiln 1 set under an oxygen atmosphere at an oxygen concentration of 90% or higher. Further, at the same time, the heat treatment is carried out by exhausting a carbon dioxide gas thus generated from the second precursor by a flow of the oxidative gas thus operated through the second gas feeding system.

Preferably, the carbon dioxide gas generated from the second precursor is exhausted through an exhaust port provided on a side surface at an upstream side in the furnace tube 10 in the axis direction of the furnace tube 10. Further, preferably the heat treatment is carried out by adjusting at least one of a spray amount of the oxidative gas, a spray angle and an oxygen concentration of the atmosphere operated through the first gas feeding system, to be dependent on the input amount of the second precursor, the temperature of the heat treatment, the oxygen concentration of the atmosphere and the rotating rate of the furnace tube 10.

Here, it should be noted that the third heat treating substep S23 is carried out mainly for the purpose of achieving the sufficient oxidation and growth of the crystal particles as mentioned hereinbefore. Thus, in the third heat treating substep S23, the first gas feeding system that sprays the oxidative gas has a highly important role.
Hence, in the third heat treating substep S23, both the first and second gas feeding systems may be adjusted as in the second heat treating substep S22. However, instead of this operation, the first gas feeding system may be adjusted, while the second gas feeding system is operated under a default condition without being adjusted.

Here, preferably the third heat treating substep S23 is carried out by completely exhausting the atmospheric gas used in the second heat treating substep S22 after completion of the second heat treating substep S22, and introducing a new atmospheric gas. Further, when a rotary kiln 1 having a structure shown in FIG.2 is used in both the second heat treating substep S22 and the third heat treating substep S23, the second heat treating substep S22 may be carried out by using a single rotary kiln 1, and after that, the third heat treating substep S23 may be carried out by using the same rotary kiln 1.

Alternatively, the second heat treating substep S22 and the third heat treating substep S23 may be carried out respectively in the order by using a plurality of rotary kilns 1, or the second heat treating substep S22 and the third heat treating substep S23 may be carried out successively by using a single rotary kiln 1.

According to the method for producing the cathode active material used for the lithium secondary battery as described hereinbefore, the precursor of the lithium composite compound before being fired is heat-treated with rotating by the rotary kiln 1 provided with the first and second gas feeding systems. This operation enables efficient oxygen supply to the precursor as well as efficient removal of the carbon dioxide gas thus generated from the precursor.

Hence, the precursor containing nickel can be efficiently fired in a short time, enabling production of the cathode active material having a high purity and a high charge/discharge capacity in a short steps time. Such short time operation reduces a cost of the heat treatment and a cost of supplying the atmospheric gas. Accordingly, the cathode active material can be industrially produced at a low cost.

Note, the embodiments of the present invention are not restricted by the above described first, second and third heat treating substeps. A key point thereof is a use of at least a firing furnace described in the firing step, for example, a use of the rotary kiln 1. Here, the rotary kiln 1 used in the firing step may be appropriately modified with respect to the construction such as a structure, a shape and a dimension without apart from the scope and spirit of the present invention.

For example, the rotary kiln 1 may be modified to a batch type furnace tube. Further, the height, the position in the longitudinal direction, the shape, the length, the width, the diameter and the number of each first gas feeding pipe 30 and second gas feeding pipe 40 are not limited to the specific examples of the construction shown in FIG.2. Instead, the arrangement and structure thereof may be appropriately modified in design to be utilized. For example, in case of a large furnace, a first gas feeding pipe with a relatively large diameter is arranged to be inserted around the axis of the furnace tube 10. The first gas feeding system is configured so that an oxidative gas is sprayed toward the inner circumferential surface of the furnace tube 10 from the first gas feeding tube. In this case, the second gas feeding system may be configured to make the oxidative gas flow through the first gas feeding pipe and a space around the furnace tube 10, instead of separately arranging the second gas feeding pipe 40.

Further, the first gas feeding pipe 30 and the second gas feeding pipe 40 may independently have a gas source, or share the same gas source. Moreover, each of the first gas feeding pipe 30 and the second gas feeding pipe 40 may be included in a single system, or in a plurality of systems. In the first gas feeding pipe 30, a single pipe may have a plurality of injection ports 32, or each of the multiple pipes may have an injection port 32. An oxygen concentration detector and a carbon dioxide concentration detector may be provided at an inlet and/or an outlet of the furnace tube.

### EXAMPLES

Hereinafter, the present invention will be more specifically described referring to examples. However, the technological scope of the present invention is not limited to those examples.

### (Example 1)

As starting materials of the cathode active material, prepared were lithium carbonate, nickel hydroxide, cobalt carbonate and manganese carbonate. Those starting materials were weighed so that the atomic ratio was represented by Li : Ni : Co : Mn = 1.04 : 0.80 : 0.15 : 0.05, and then subjected to the mixing step S1. Specifically, ion exchange water was added to those materials to be mixed so that a total amount of the starting materials was 20 mass%. Then, the mixture was ground and mixed in a bead mill. The resulting solid-liquid mixture was dried by a spray dryer to produce a mixed powder of the starting materials.

Next, the mixed powder of the starting materials thus obtained was filled in a firing vessel made of alumina, and heat-treated under an air atmosphere at 360°C for 1 hr by using a roller hearth kiln (i.e., a first heat treating substep S21), thereby to prepare a first precursor. This heat treatment not only removed water absorbed by the mixed powder of the starting materials but also heat-decomposed nickel hydroxide and partially heat-decomposed the respective carbonates. Further, a certain amount of a carbon dioxide gas (CO₂) was also removed.

Next, the first precursor thus obtained was thrown into a rotary kiln 1 having a structure shown in FIG.2, and heat-treated at 755°C for 1 hr while supplied with a gas by a first gas feeding pipe 30 and a second gas feeding pipe 40 in a rotating furnace tube 10 (i.e., a second heat treating substep S22). Thereby, a second precursor was produced. Herein, the furnace tube 10 was made of high purity alumina, set with an inclination angle of 1° and a rotating rate of 1rpm. Further, a lifter 50 was made of ceramics and set so as to agitate the first precursor while heat-treated and sprayed with an oxygen gas in a heating zone 120. Moreover, an exhaust port for discharging the atmospheric gas was horizontally provided at an upstream side on a side surface of the furnace tube 10.

Injection ports 32 of the first gas feeding pipe 30 were arranged in both the preheating zone 110 and the heating zone 120 so that an oxygen gas was sprayed onto the first precursor rotating and flowing in both the preheating zone 110 and the heating zone 140. This is because a carbon dioxide gas derived from lithium carbonate is generated when the first precursor is preheated at 360°C or higher. Further, an oxygen gas was pressure-fed from a gas source to the first and second gas feeding pipes 30 and 40 so that a ratio of a supply amount of the first gas feeding pipe 30 (i.e., a total injection amount) against a supply amount of the second gas feeding pipe 40 (i.e., an amount of gas flow) was set to 5.0 (i.e., = a gas amount by the first gas feeding pipe 30 / a gas amount by the second gas feeding pipe 40).

Moreover, an injection pressure of the second gas feeding pipe 40 was adjusted by the gas supply amount at such a degree as to blow up a carbon dioxide gas thus generated from the first precursor toward an upper potion in the furnace tube 10, but blow up no powder of the first precursor therein.

Next, an advance degree of the second heat treating substep S22 using the rotary kiln 1 was evaluated by a firing degree of the second precursor thus obtained. More specifically, an amount of the unreacted lithium carbonate remaining in the second precursor thus obtained and a specific surface area of the second precursor were measured. The amount of lithium was measured in a neutralization method using hydrochloric acid by the following procedure.

First, a powder of the second precursor of about 0.5 g was weighed, added with purified water of 30 mL, and agitated for 30 min. After that, the resulting mixture was filtrated via a membrane filter with a pore size of 0.45 µm, thereby to obtain a filtrate. Then, the resulting filtrate was titrated to neutral by hydrochloric acid, thereby to analyze a total base amount, an amount of lithium hydroxide, and an amount of lithium carbonate. Further, the specific surface area of the second precursor was measured by a BET method via filling the powder of 0.5g in a measurement glass cell. Table 1 shows the measurement results of the amount of lithium carbonate and the specific surface area.

### (Example 2)

A second precursor was obtained the same as in Example 1 except that the oxygen gas was injected only to the heating zone 120 in the rotary kiln 1, while no oxygen gas was injected to the preheating zone 110. Then, an amount of lithium carbonate and a specific surface area were measured the same as in Example 1. Table 1 shows the measurement results of the amount of lithium carbonate and the specific surface area.

### (Example 3)

A second precursor was obtained the same as in Example 1 except that a ratio of a gas supply amount by the first gas feeding pipe 30 (i.e., a total injection amount) to a gas supply amount by the second gas feeding pipe 40 (i.e., an amount of gas flow) was set to 3.7 (i.e., = a gas amount of the first gas feeding pipe 30 / a gas amount of the second gas feeding pipe 40). Then, an amount of lithium carbonate and a specific surface area were measured the same as in Example 1. Table 1 shows the measurement results of the amount of lithium carbonate and the specific surface area.

### (Comparative Example 1)

A second precursor was obtained the same as in Example 1 except that gas feeding (or injection) of the first gas feeding pipe 30 was stopped and no lifter 50 was provided in the rotary kiln 1. Then, an amount of lithium carbonate and a specific surface area were measured the same as in Example 1. Table 1 shows the measurement results of the amount of lithium carbonate and the specific surface area.

### (Comparative Example 2)

A second precursor was obtained the same as in Example 1 except that gas feeding (or injection) of the first gas feeding pipe 30 was stopped in the rotary kiln 1. Then, an amount of lithium carbonate and a specific surface area were measured the same as in Example 1. Table 1 shows the measurement results of the amount of lithium carbonate and the specific surface area.

### (Reference Example 1)

A mixed powder of the starting materials thus obtained by a mixing step S1 conducted the same as in Example 1 was filled in a firing vessel made of alumina, and heat-treated under an oxygen atmosphere at 755°C for 1 hr in a settled furnace (i.e., a roller hearth kiln), thereby to obtain a calcinated powder. Then, an amount of lithium carbonate and a specific surface area of the calcinated powder were measured the same as in Example 1. Table 1 shows the measurement results of the amount of lithium carbonate and the specific surface area.

**Table 1.**

| | Rotary Kiln | | | | Second Precursor | |
|---|---|---|---|---|---|---|
| | Lifter | 1st Gas Feeding System | | 2nd Gas Feeding System | Lithium Carbonate [mass%] | Specific Surface Area [m²/g] |
| | | Preheating Zone | Heating Zone | | | |
| Example 1 | Use | Use | Use | Use | 3.2 | 2.4 |
| Example 2 | Use | No | Use | Use | 4.4 | 3.2 |
| Example 3 | Use | Use | Use | Use | 3.5 | 2.3 |
| Comparative Example 1 | No | No | No | Use | 7.8 | 3.9 |
| Comparative Example 2 | Use | No | No | Use | 6.7 | 3.0 |
| Reference Example 1 | - | - | - | - | 4.5 | 2.9 |

As shown in Table 1, it is confirmed that the amounts of lithium carbonate in Examples 1-3 are smaller than that in Comparative Example 1, and a reaction forming a lithium composite compound is facilitated by the agitation through the lifter 50 and the injection of the oxygen gas performed via the first gas feeding system. Since the amount of lithium carbonate in Comparative Example 2 is smaller than that in Comparative Example 1, it is confirmed that the agitation through the lifter 50 is effective for facilitating the reaction forming the lithium composite compound. Further, the amounts of lithium carbonate in Examples 1-3 are remarkably smaller than that in Comparative Example 2. The result shows that the injection of the oxygen gas by the first gas feeding system is extremely effective for facilitating the reaction forming the lithium composite compound.

Further, as shown in Table 1, the amount of lithium carbonate and the specific surface area in Example 2 are similar to those in Reference Example 1 subjected to the heat treatment by a settled furnace. A supply amount of the oxygen gas is generally small as 1/5 - 1/6, and the reaction forming the lithium composite compound sufficiently advances by a rotary kiln 1 requiring no specific firing vessel. Further, it is shown that the specific surface area is not decreased due to progress of the liquid phase reaction, indicating that the solid phase reaction surely advances. In addition, since the rotary kiln 1 is provided with the first and second gas feeding systems, it is considered that the oxidative reaction of nickel is sufficiently carried out in a short time when compared to a reaction using a settled furnace.

In contrast, as shown in Table 1, the amount of lithium carbonate and the specific surface area in Example 1 are smaller than those in Reference Example thus heat-treated by a settled furnace. The results indicate that the injection of the oxygen gas to both the preheating zone 110 and the heating zone 120 by the first gas feeding system is effective for facilitating the reaction forming the lithium composite compound. Further, the injection of the oxygen gas to the preheating zone 110 by the first gas feeding system further facilitates the solid phase reaction but not the liquid phase reaction. That is, the rotary kiln 1 including the first and second gas feeding systems is effective for facilitating the solid phase reaction compared to a conventional settled furnace.

### (Example 4)

The second precursor obtained in Example 1 was rethrown in the same rotary kiln 1. The second precursor was teat-treated at 830°C for 1 hr in the rotating furnace tube 10 while being fed with the oxygen gas by the first and second gas feeding pipes 30, 40 (i.e., the third heat treating substep S23). Hereby, a lithium composite compound (or a cathode active material) having a composition of Li_{1.0}Ni_{0.80}Co_{0.15}Mn_{0.05}O₂ was obtained. Then, an amount of the unreacted lithium carbonate remaining in the cathode active material thus obtained and a specific surface area of the cathode active material were measured. Table 2 shows the measurement results of the amount of lithium carbonate and the specific surface area.

Next, a lithium secondary battery was produced by the following procedure using the obtained cathode active material as a cathode material. First, the cathode active material, a binding agent and a conductive material were mixed to prepare slurry of cathode mixture. Then, the prepared slurry of cathode mixture was applied to an aluminum foil used as a cathode collector with a thickness of 20 µm, dried at 120°C, and compression-molded by a press to have an electrode density of 2.0 g/cm³. The resulting product was punched out in a disc shape with a diameter of 15 mm, whereby a cathode was produced. Further, an anode was produced using a lithium metal as an anode material.

Then, a lithium secondary battery was produced by using the cathode and the anode thus produced, and a non-aqueous electrolyte solution. Herein, the non-aqueous electrolyte solution was prepared by dissolving LiPF₆ in a mixing solvent of ethylene carbonate and dimethyl carbonate at the volume ratio of 3 : 7, so that the final concentration reached 1.0 mol/L.

Next, using the lithium secondary battery thus produced, an initial charge/discharge capacity was measured by the following procedure. First, a charge current was set to 0.2CA, and the battery was charged at a constant current and voltage up to the final charge voltage of 4.3V. After that, a discharge current was set to 0.2CA, and the battery was discharged at a constant current up to the final discharge voltage of 2.5V. The charge/discharge capacity was calculated by the discharge amperage at that time. Table 2 shows the results.

### (Comparative Example 3)

A mixed powder of raw materials thus obtained by a mixing step S1 conducted the same as in Example 1 was filled in a firing vessel made of alumina, and heat-treated under an oxygen atmosphere at an oxygen concentration of 99.5% at 600°C for 10 hr by a settled furnace (i.e., a roller hearth kiln), thereby to produce a calcination powder. Then, the obtained calcination powder was further heat-treated under an oxygen atmosphere at an oxygen concentration of 99.5% at 760°C for 10 hr by a settled furnace (i.e., a roller hearth kiln), thereby to produce a lithium composite compound (or a cathode active material).

After that, an amount of the unreacted lithium carbonate remaining in the cathode active material thus obtained, a specific surface area of the cathode active material, and an initial discharge capacity were measured. Table 2 shows the amount of lithium carbonate, the specific surface area and the discharge capacity.

**Table 2.**

| | Firing Step | | | Cathode Active Material | | Secondary Battery |
|---|---|---|---|---|---|---|
| | 1st Heat Treating Substep | 2nd Heat Treating Substep | 3rd Heat Treating Substep | Lithium Carbonate [mass%] | Specific Surface Area [m²/g] | Discharge Capacity [Ah/kg] |
| Example 4 | Settled Furnace 360°C, 1hr | Rotary Kiln 755°C, 1hr | Rotary Kiln 830°C, 1 hr | 0.3 | 1.3 | 196 |
| Comparative Example 3 | - | Settled Furnace 600°C, 10 hr | Settled Furnace 760°C, 10 hr | 0.2 | 0.8 | 195 |

As shown in Table 2, Comparative Example 3 that corresponds to a conventional and general firing method requires 10 hr for each heat treatment. On the contrary, Example 4 that uses the rotary kiln 1 having a structure in FIG.2 shows the same levels of the lithium carbonate amount and the specific surface area as in Comparative Example 3. Herein, it should be noted that in Example 4, a cathode active material realizing the same level of the discharge capacity is fired for a remarkably shorten time in the heat treatment.

Accordingly, the rotary kiln 1 including the first and second gas feeding systems can more efficiently fire the nickel-containing precursor than a conventional settled furnace. Further, the rotary kiln 1 can markedly decrease a large amount of the atmospheric gas supply for keeping the reaction atmosphere in the oxidative one.

### (Example 5)

The first precursor obtained in Example 1 was thrown in the rotary kiln 1 conducted the same as in Example 1. The first precursor was teat-treated at 650°C for 3.5 hr in the rotating furnace tube 10 while being fed with the oxygen gas by the first and second gas feeding pipes 30, 40 at a gas feeding ratio of 3.7 (i.e., = an amount by the first gas feeding pipe 30 / an amount by the second gas feeding pipe 40). After that, the resulting product was rethrown in the same rotary kiln 1 and heat-treated at 755°C for 0.7 hr (i.e., the second heat treating substep S22), thereby producing a second precursor. Namely, the second heat treating substep S22 was performed totally two times. Next, the second precursor was rethrown in the same rotary kiln 1, and heat-treated at 880°C for 0.7 hr, thereby producing a lithium composite compound (or a cathode active material) having a composition of Li_{1.0}Ni_{0.80}Co_{0.15}Mn_{0.05}O₂.

Then, amounts of the unreacted lithium carbonate and hydroxy lithium remaining in the cathode active material thus obtained and a specific surface area of the cathode active material were measured. Further, a lithium secondary battery was produced by using the obtained cathode active material the same as in Example 4 so as to calculate a discharge capacity in the way the same as in Example 4 except that the final charge voltage was changed to 4.2V. Table 3 shows the measurement results of the amounts of lithium carbonate, the specific surface area and the discharge capacity.

### (Example 6)

For removing excess Li remaining on particle surfaces of the cathode active material thus obtained in Example 5, the cathode active material of 10 g was spread over a membrane filter having a pore size of 0.2 µm placed on a suction filtration apparatus. Then, purified water of 5 mL was poured, and filtrated in suction, to give a filtration cake. The filtration cake thus obtained was filled in an alumina boat, and dried in vacuo at 240°C for 14 hr.

Next, the amounts of lithium carbonate and lithium hydroxide remaining in the cathode active material thus obtained and the specific surface area of the cathode active material were measured. Further, a lithium secondary battery was produced by using the obtained cathode active material the same as in Example 4 to calculate a discharge capacity in the similar way to Example 4 except that the final charge voltage was changed to 4.2V. Table 3 shows the measurement results of the amount of lithium carbonate, the specific surface area and the discharge capacity.

### (Example 7)

A cathode active material removing excess Li by washing was obtained similarly to Example 6 except that the cathode active material of 40 g and purified water of 20 mL were used. Then, the amounts of lithium carbonate and lithium hydroxide remaining in the cathode active material thus obtained and the specific surface area of the cathode active material were measured.

Further, a lithium secondary battery was produced by using the obtained cathode active material conducted the same as in Example 4. Then, a discharge capacity was calculated in the same way as in Example 4 except that the final charge voltage was changed to 4.2V. Table 3 shows the measurement results of an amount of lithium carbonate, a specific surface area and a discharge capacity.

**Table 3.**

| | Firing Step | | | Washing Step | Cathode Active Material | | | Secondary Battery |
|---|---|---|---|---|---|---|---|---|
| | 1st Heat Treating Substep | 2nd Heat Treating Substep | 3rd Heat Treating Substep | | Lithium Carbonate [mass%] | Lithium Hydroxide [mass%] | Specific Surface Area [m²/g] | Discharge Capacity (4.2V) [Ah/kg] |
| Example 5 | Settled Furnace | Rotary Kiln | Rotary Kiln | No | 0.17 | 0.44 | 0.23 | 176 |
| | 360°C, 1 hr | 650°C, 3.5 hr | 880°C, 0.7hr | | | | | |
| | | then 755°C, 0.7hr | | | | | | |
| Example 6 | Settled Furnace | Rotary Kiln | Rotary Kiln | Yes | 0.13 | 0.04 | 0.48 | 176 |
| | 360°C, 1 hr | 650°C, 3.5 hr + | 880°C, 0.7hr | | | | | |
| | | then 755°C, 0.7hr | | | | | | |
| Example 7 | Settled Furnace | Rotary Kiln | Rotary Kiln | Yes | 0.09 | 0.08 | 0.42 | 177 |
| | 360°C, 1 hr | 650°C, 3.5 hr + | 880°C, 0.7hr | | | | | |
| | | then 755°C, 0.7hr | | | | | | |

As shown in Table 3, although the specific surface area in Example 5 was decreased compared to that in Example 4, the amount of lithium carbonate was decreased. It should be noted that Example 5 used a longer time of the heat treatment in the second heat treating substep S22 than Example 4, and a high temperature of the heat treatment in the third heat treating substep S23. Therefore, it is considered that oxidation of nickel and decarboxylation sufficiently proceeded.

Further, in Examples 6 and 7, li remaining on particle surfaces of the cathode active material was removed by washing, which enabled a decrease in the amount of lithium hydroxide into less than 0.1 mass%. Hence, suppression of remaining lithium produced a cathode active material having a low eluting alkali property and excellent gelation resistance.

Here, note that cathode active materials were further produced by the procedures similar to the above described Examples except that the compositions and heat treatment temperatures were different from those in Examples. An amount of remaining lithium carbonate was decreased, and nickel was supposed to be sufficiently oxidized in use of the rotary kiln 1 including the first and second gas feeding systems. Accordingly, those results may demonstrate that the method of the present invention is applicable to various targets without largely depending on compositions and heat treatment conditions of the cathode active material.

### Description of Reference Numerals

- S1:: Mixing Step
- S2:: Firing Step
- S21:: First Heat Treating Substep
- S22:: Second Heat Treating Substep
- S23:: Third Heat Treating Substep
- 1:: Rotary Kiln (i.e., Firing Furnace)
- 10:: Furnace Tube
- 20:: Heater
- 30:: First Gas Feeding Pipe
- 32:: Injection Port
- 40:: Second Gas Feeding Pipe
- 50:: Lifter
- 110:: Preheating Zone
- 120:: Heating Zone
- Ma:: To-Be-Treated Material

## Claims

1. A method for producing a cathode active material used for a lithium secondary battery, comprising the steps of:
mixing lithium carbonate with a compound containing a metal element other than Li in the following formula (1); and
firing a precursor thus obtained via the mixing step thereby to obtain a lithium composite compound represented by the following formula (1), wherein
the firing step includes at least a heat treating substep of performing heat treatment of the precursor while rotating the precursor in a furnace tube of a firing furnace;
the furnace tube includes a first gas feeding system that injects an oxidative gas toward an inner circumferential surface of the furnace tube, and a second gas feeding system that makes an oxidative gas flow toward an axis direction of the furnace tube; and
the heat treating substep includes:
spraying the oxidative gas by the first gas feeding system to the precursor rotating and flowing from an upstream side to a downstream side in the furnace tube; and
exhausting a carbon dioxide gas thus generated from the precursor by a flow of the oxidative gas operated via the second gas feeding system to perform the heat treatment,
Li₁₊ₐM1O_{2+α} ----- Formula (1)
(where in the formula (1), M1 is a metal element other than Li and includes at least Ni, a content of the nickel per M1 is more than 70 atom%, and "a" and "α" are the numerals satisfying the following conditions: -0.1 < a < 0.2, -0.2 < α < 0.2).

2. The method for producing a cathode active material used for a lithium secondary battery described in claim 1, wherein the second gas feeding system makes the oxidative gas flow from a downstream side to an upstream side in the furnace tube.

3. The method for producing a cathode active material used for a lithium secondary battery described in claim 1 or claim 2, wherein
the firing furnace includes an exhaust port on an side surface at an upstream side in the furnace tube,
the heat treating substep includes the step of exhausting the carbon dioxide gas through the exhaust port in the axis direction of the furnace tube.

4. The method for producing a cathode active material used for a lithium secondary battery described in any one of claims 1-3, wherein
the firing furnace includes a lifter arranged only in a heating zone heated in the heat treatment on an inner circumferential surface of the furnace tube; and
the heat treating substep includes heat-treating the precursor thus heated while agitating the precursor by the lifter.

5. The method for producing a cathode active material used for a lithium secondary battery described in any one of claims 1-4, wherein the heat treatment is performed by adjusting at least a spray amount, a spray angle and an oxygen concentration of the oxidative gas operated by the first gas feeding system.

6. The method for producing a cathode active material used for a lithium secondary battery described in any one of claims 1-5, comprising the steps of:
mixing lithium carbonate with a compound containing a metal element other than Li in the following formula (2); and
firing a precursor thus obtained through the mixing step thereby to obtain a lithium composite compound represented by the following formula (2), wherein
the firing step includes:
a first heat treating substep of heat-treating a mixture thus obtained in the mixing step at a temperature of 200°C or higher and 400°C or lower for a time of 0.5 hr or longer and 5 hr or shorter thereby to obtain a first precursor;
a second heat treating substep of heat-treating the first precursor at a temperature of 450°C or higher and 900°C or lower for a time of 0.1 hr or longer and 50 hr or shorter thereby to obtain a second precursor; and
a third heat treating substep of heat-treating the second precursor at a temperature of 700°C or higher and 900°C or lower for a time of 0.1 hr or longer and 50 hr or shorter thereby to obtain the lithium composite compound, wherein
either or both of the second and third heat treating substeps are performed by:
spraying an oxidative gas onto the first precursor or the second precursor that rotates and flows from an upstream side to a downstream side in the furnace tube; and
simultaneously exhausting a carbon dioxide gas thus generated from the first precursor or the second precursor,
Li₁₊ₐNi_{b}Mn_{c}Co_{d}M2ₑO_{2+α} ----- Formula (2)
(where in the formula (2), M2 is at least one kind of elements selected from the group of Al, Ti, Zr, Mo and Nb; "a", "b", "c", "d", "e" and "a" are the numerals satisfying the following conditions: -0.1 < a < 0.2, 0.7 < b < 0.9, 0 < c < 0.3, 0 < d < 0.3, 0 < e < 0.25, b + c + d + e = 1, and -0.2 < α < 0.2).

## Patentansprüche

1. Verfahren zur Herstellung eines Kathodenaktivmaterials, das für eine Lithium-Sekundärbatterie verwendet wird, mit den folgenden Schritten:
Mischen von Lithiumcarbonat mit einer Verbindung, die ein anderes Metallelement als Li in der folgenden Formel (1) enthält; und
Brennen eines so durch den Mischschritt erhaltenen Vorläufers, um dadurch eine Lithiumverbundverbindung zu erhalten, die durch die folgende Formel (1) dargestellt wird, wobei
der Brennschritt mindestens einen Wärmebehandlungsunterschritt des Durchführens einer Wärmebehandlung des Vorläufers unter Drehen des Vorläufers in einem Ofenrohr eines Brennofens umfasst,
das Ofenrohr ein erstes Gaszufuhrsystem, das ein oxidatives Gas in Richtung einer inneren Umfangsfläche des Ofenrohrs einleitet, und ein zweites Gaszufuhrsystem enthält, das ein oxidatives Gas in Richtung einer Achsenrichtung des Ofenrohrs strömen lässt, und
der Teilschritt der Wärmebehandlung umfasst:
Versprühen des oxidativen Gases durch das erste Gaszufuhrsystem auf den Vorläufer, der sich dreht und von einer stromaufwärtigen Seite zu einer stromabwärtigen Seite in dem Ofenrohr strömt; und
Ablassen eines auf diese Weise aus dem Vorläufer erzeugten Kohlendioxidgases durch einen Strom des oxidativen Gases, der über das zweite Gaszufuhrsystem zur Durchführung der Wärmebehandlung betrieben wird,
Li₁₊ₐM1O_{2+α} ----- Formel (1)
(wobei in der Formel (1) M1 ein anderes Metallelement als Li ist und mindestens Ni enthält, der Nickelgehalt pro M1 mehr als 70 Atom-% beträgt, und "a" und "a" Zahlen sind, die die folgenden Bedingungen erfüllen: -0,1 ≤ a ≤ 0,2, -0,2 ≤ α ≤ 0,2).

2. Verfahren zur Herstellung eines Kathodenaktivmaterials, das für eine Lithium-Sekundärbatterie verwendet wird, nach Anspruch 1, wobei das zweite Gaszufuhrsystem das oxidative Gas von einer stromabwärtigen Seite zu einer stromaufwärtigen Seite in dem Ofenrohr strömen lässt.

3. Verfahren zur Herstellung eines Kathodenaktivmaterials, das für eine Lithium-Sekundärbatterie verwendet wird, nach Anspruch 1 oder Anspruch 2, wobei
der Brennofen eine Abluftöffnung an einer Seitenfläche an einer stromaufwärtigen Seite in dem Ofenrohr aufweist,
der Teilschritt der Wärmebehandlung den Schritt des Ablassens des Kohlendioxidgases durch die Abluftöffnung in der Achsenrichtung des Ofenrohrs umfasst.

4. Verfahren zur Herstellung eines Kathodenaktivmaterials, das für eine Lithium-Sekundärbatterie verwendet wird, nach einem der Ansprüche 1-3, wobei
der Brennofen einen Heber enthält, der nur in einer Heizzone angeordnet ist, die bei der Wärmebehandlung auf einer inneren Umfangsfläche des Ofenrohrs erhitzt wird; und
der Teilschritt der Wärmebehandlung die Wärmebehandlung des so erhitzten Vorläufers unter Bearbeitung des Vorläufers durch den Heber umfasst.

5. Verfahren zur Herstellung eines Kathodenaktivmaterials, das für eine Lithium-Sekundärbatterie verwendet wird, nach einem der Ansprüche 1-4, wobei die Wärmebehandlung durch Einstellen mindestens einer Sprühmenge, eines Sprühwinkels und einer Sauerstoffkonzentration des oxidativen Gases durch das erste Gaszufuhrsystem durchgeführt wird.

6. Verfahren zur Herstellung eines Kathodenaktivmaterials, das für eine Lithium-Sekundärbatterie verwendet wird, nach einem der Ansprüche 1-5, umfassend die folgenden Schritte:
Mischen von Lithiumcarbonat mit einer Verbindung, die ein anderes Metallelement als Li in der folgenden Formel (2) enthält; und
Brennen eines so durch den Mischschritt erhaltenen Vorläufers, um dadurch eine Lithium-Verbundverbindung zu erhalten, die durch die folgende Formel (2) dargestellt wird, wobei
der Brennschritt beinhaltet:
einen ersten Wärmebehandlungsteilschritt der Wärmebehandlung einer so in dem Mischschritt erhaltenen Mischung bei einer Temperatur von mindestens 200°C und höchstens 400°C für eine Zeit von mindestens 0,5 Stunden und höchstens 5 Stunden, um dadurch einen ersten Vorläufer zu erhalten;
einen zweiten Wärmebehandlungsteilschritt des Wärmebehandelns des ersten Vorläufers bei einer Temperatur von mindestens 450°C und höchstens 900°C für eine Zeit von mindestens 0,1 Stunden und höchstens 50 Stunden, um dadurch einen zweiten Vorläufer zu erhalten; und
einen dritten Wärmebehandlungsteilschritt des Wärmebehandelns des zweiten Vorläufers bei einer Temperatur von mindestens 700°C und höchstens 900°C für eine Zeit von mindestens 0,1 Stunden und höchstens 50 Stunden, um dadurch die Lithium-Verbundverbindung zu erhalten, wobei
einer oder beide der zweiten und dritten Wärmebehandlungsteilschritte dadurch ausgeführt werden, dass:
ein oxidatives Gas auf den ersten Vorläufer oder den zweiten Vorläufer aufgesprüht wird, der rotiert und von einer stromaufwärtigen Seite zu einer stromabwärtigen Seite in dem Ofenrohr strömt; und
gleichzeitig ein so erzeugtes Kohlendioxidgas aus dem ersten Vorläufer oder dem zweiten Vorläufer abgelassen wird,
Li₁₊ₐNi_{b}Mn_{c}Co_{d}M2ₑO_{2+α} ----- Formel (2)
(wobei in der Formel (2) M2 mindestens ein Element ausgewählt aus der Gruppe Al, Ti, Zr, Mo und Nb ist, und "a", "b", "c", "d", "e" und "a" Zahlen sind, die die folgenden Bedingungen erfüllen: -0,1 ≤ a ≤ 0,2, 0,7 < b ≤ 0,9, 0 ≤ c < 0,3, 0 ≤ d < 0,3, 0 ≤ e ≤ 0,25, b + c + d + e = 1, und -0,2 ≤ α ≤ 0,2).

## Revendications

1. Procédé de production d'un matériau actif de cathode utilisé pour une batterie secondaire au lithium, comprenant les étapes de :
mélange de carbonate de lithium avec un composé contenant un élément métallique autre que le Li dans la formule (1) suivante ; et
cuisson d'un précurseur ainsi obtenu via l'étape de mélange pour obtenir ainsi un composé composite de lithium représenté par la formule (1) suivante, dans laquelle
l'étape de cuisson comprend au moins une sous-étape de traitement thermique consistant à effectuer un traitement thermique du précurseur tout en faisant tourner le précurseur dans un tube de four d'un four de cuisson ;
le tube de four comprend un premier système d'alimentation en gaz qui injecte un gaz oxydant vers une surface circonférentielle intérieure du tube de four, et un second système d'alimentation en gaz qui fait s'écouler un gaz oxydant vers une direction d'axe du tube de four ; et
la sous-étape de traitement thermique comprend :
la pulvérisation du gaz oxydant par le premier système d'alimentation en gaz vers le précurseur tournant et s'écoulant d'un côté amont vers un côté aval dans le tube de four ; et
l'évacuation d'un dioxyde de carbone gazeux ainsi généré à partir du précurseur par un flux du gaz oxydant alimenté via le second système d'alimentation en gaz pour effectuer le traitement thermique,
Li₁₊ₐM1O_{2+α} ---- Formule (1)
(où dans la formule (1), M1 est un élément métallique autre que le Li et comprend au moins du Ni, une teneur en nickel par M1 est supérieure à 70 % atomique, et « a » et « α » sont les nombres satisfaisant les conditions suivantes : - 0,1 ≤ a ≤ 0,2, -0,2 ≤ α ≤ 0,2).

2. Procédé de production d'un matériau actif de cathode utilisé pour une batterie secondaire au lithium décrit dans la revendication 1, dans lequel le second système d'alimentation en gaz fait s'écouler le gaz oxydant d'un côté aval vers un côté amont dans le tube de four.

3. Procédé de production d'un matériau actif de cathode utilisé pour une batterie secondaire au lithium, décrit dans la revendication 1 ou la revendication 2, dans lequel
le four de cuisson comprend un orifice d'échappement sur une surface latérale d'un côté amont dans le tube de four,
la sous-étape de traitement thermique comprend l'étape consistant à évacuer le dioxyde de carbone gazeux à travers l'orifice d'échappement dans la direction de l'axe du tube de four.

4. Procédé de production d'un matériau actif de cathode utilisé pour une batterie secondaire au lithium décrit dans l'une quelconque des revendications 1 à 3, dans lequel
le four de cuisson comprend un élévateur disposé uniquement dans une zone de chauffage chauffée lors du traitement thermique sur une surface circonférentielle intérieure du tube de four ; et
la sous-étape de traitement thermique comprend le traitement thermique du précurseur ainsi chauffé tout en agitant le précurseur par l'élévateur.

5. Procédé de production d'un matériau actif de cathode utilisé pour une batterie secondaire au lithium décrit dans l'une quelconque des revendications 1 à 4, dans lequel le traitement thermique est effectué par ajustement d'au moins une quantité de pulvérisation, un angle de pulvérisation et une concentration en oxygène du gaz oxydant alimenté par le premier système d'alimentation en gaz.

6. Procédé de production d'un matériau actif de cathode utilisé pour une batterie secondaire au lithium décrit dans l'une quelconque des revendications 1 à 5, comprenant les étapes de :
mélange de carbonate de lithium avec un composé contenant un élément métallique autre que le Li dans la formule (2) suivante ; et
cuisson d'un précurseur ainsi obtenu par l'étape de mélange pour obtenir ainsi un composé composite de lithium représenté par la formule (2) suivante, dans laquelle
l'étape de cuisson comprend :
une première sous-étape de traitement thermique consistant à traiter thermiquement un mélange ainsi obtenu à l'étape de mélange à une température de 200 °C ou plus et 400 °C ou moins pendant une durée de 0,5 heure ou plus et de 5 heures ou moins pour obtenir ainsi un première précurseur ;
une deuxième sous-étape de traitement thermique consistant à traiter thermiquement le premier précurseur à une température de 450 °C ou plus et 900 °C ou moins pendant une durée de 0,1 heure ou plus et de 50 heures ou moins pour obtenir ainsi un second précurseur ; et
une troisième sous-étape de traitement thermique de traitement thermique du second précurseur à une température de 700 °C ou plus et 900 °C ou moins pendant une durée de 0,1 heure ou plus et de 50 heures ou moins pour obtenir ainsi le composé composite de lithium, dans laquelle
l'une ou les deux des deuxième et troisième sous-étapes de traitement thermique sont effectuées par :
pulvérisation d'un gaz oxydant sur le premier précurseur ou le second précurseur qui tourne et s'écoule d'un côté amont vers un côté aval dans le tube de four ; et
évacuation simultanée d'un dioxyde de carbone gazeux ainsi généré à partir du premier précurseur ou du second précurseur,
Li₁₊ₐNi_{b}Mn_{c}Co_{d}M2ₑO_{2+α} ---- Formule (2)
(où dans la formule (2), M2 est au moins un type d'éléments choisi dans le groupe de l'Al, du Ti, du Zr, du Mo et du Nb ; « a », « b », « c », « d », « e » et « α »sont les nombres satisfaisant aux conditions suivantes : -0,1 ≤ a ≤ 0,2, 0,7 < b ≤ 0,9, 0 ≤ c < 0,3, 0 ≤ d < 0,3, 0 ≤ e ≤ 0,25, b + c + d + e = 1, et -0,2 ≤ α ≤ 0.2).
